# EUROPÄISCHE PATENTSCHRIFT

(11) **EP 3 233 416 B1**
(45) Veröffentlichungstag und Bekanntmachung des Hinweises auf die Patenterteilung: **29.09.2021**
(21) Anmeldenummer: 15813313.2
(22) Anmeldetag: 11.12.2015
(51) Int. Cl.: B29C 48/08, B29C 48/92, B29C 48/88, B29C 55/02

(54) **VERFAHREN UND MESSVORRICHTUNG ZUR ÜBERWACHUNG DER DEHNFÄHIGKEIT BEI DER HERSTELLUNG EINER STRETCHFOLIE IN EINEM GIESSFOLIENVERFAHREN**
METHOD AND MEASUREMENT DEVICE FOR MONITORING DUCTILITY IN THE PRODUCTION OF A STRETCHED FILM IN A CAST FILM METHOD
PROCÉDÉ ET DISPOSITIF DE MESURE POUR SURVEILLER L'EXTENSIBILITÉ LORS DE LA FABRICATION D'UN FILM ÉTIRABLE DANS UN PROCÉDÉ DE FEUILLE MINCE MOULÉE

(30) Priorität: 19.12.2014 DE 102014119206
(43) Veröffentlichungstag der Anmeldung: 25.10.2017
(73) Patentinhaber: Windmöller & Hölscher KG, 49525 Lengerich (DE)
(72) Erfinder: SCHMITZ, Torsten, 48268 Greven (DE); FINNEMORE, David, Elvaston Derbyshire DE72 3ER (GB); FAUSTMANN, Daniel, 49124 Georgsmarienhütte (DE); COLELL, Waldemar, 49536 Lienen (DE); GRÖPPER, Bernd-Alexander, 48317 Drensteinfurt (DE)
(74) Vertreter: Vogel, Andreas
(86) Internationale Anmeldenummer: PCT/EP2015/079397
(87) Internationale Veröffentlichungsnummer: WO 2016/096648

(56) Entgegenhaltungen:
- EP-A1- 0 522 278
- EP-A1- 1 616 687
- WO-A2-2014/143929
- DE-T2- 69 314 404
- GB-A- 2 019 045
- JP-A- H05 138 733
- US-A- 3 154 608
- US-A- 3 374 303
- US-A- 4 101 614
- US-A- 5 295 805
- None

## Beschreibung

Die vorliegende Erfindung betrifft ein Verfahren für die kontinuierliche Überwachung der Dehnfähigkeit bei der Herstellung von Stretchfolie in einem Gießfolienverfahren, eine Messvorrichtung für die Durchführung eines derartigen Verfahrens sowie eine Folienmaschine, aufweisend eine derartige Messvorrichtung.

Grundsätzlich ist es bekannt, dass in Gießfolienverfahren Stretchfolien hergestellt werden. Dabei wird üblicherweise über eine Auslassvorrichtung fließfähiges Folienmaterial auf einer Gießwalze durch einen länglichen Auslassspalt angeordnet. Eine solche Gießwalze ist üblicherweise gekühlt, so dass während der Rotation der Gießwalze in deren Rotationsverlauf das Folienmaterial abgekühlt wird. Während der Abkühlung durchläuft das Folienmaterial ein Temperaturprofil und unterschreitet zu einem bestimmten Zeitpunkt seine eigene Erstarrungstemperatur, so dass es zu erstarren beginnt. Am Abnahmepunkt für das Folienmaterial an der Gießwalze muss das Folienmaterial vollständig zu einer Folienbahn erstarrt sein.

Die Dehnfähigkeit einer Stretchfolie ist ein Hauptqualitätsmerkmal. So ist eine definierte Dehnfähigkeit notwendig, um eine gewünschte Stretchverpackung auf einer Palette mit ausreichender Sicherheit gewährleisten zu können. Bei einer Stretchfolie wird diese häufig mittels Robotertechnik um eine Palette und die darauf angeordneten Produkte gewickelt und dabei stark verformt. Der Stretchbereich führt dazu, dass durch die elastische Verformung Rückstellkräfte im Material der Stretchfolie auftreten, welche als Haltekräfte auf das Produkt auf der Palette wirken und damit die gewünschte Stabilisierung erzielen. Somit ist es notwendig, dass bei einer Stretchfolie ein Mindestmaß an Dehnfähigkeit definiert und vorgegeben sowie garantiert werden kann, um unerwünschte Folienabrisse beim Wickelverfahren zu vermeiden. Hierfür ist üblicherweise ein Labortest notwendig, welcher während dem Anfahren der Maschine und üblicherweise auch in definierten Abständen, zum Beispiel alle vier Stunden, im laufenden Betrieb durchgeführt wird. Dabei wird eine Probe der hergestellten Stretchfolie genommen und anschließend im Labor ein entsprechendes Spannungs-Dehnungs-Diagramm bestimmt. Damit wird die Einstellphase für die Herstellung der Stretchfolie sowie die Qualitätssicherung gewährleistet. Das jeweilige Probennehmen sowie der aufwendige Einstellvorgang führen jedoch zu reduzierter Gesamtqualität der Stretchfolie, zu hohem Aufwand hinsichtlich der Probennahme sowie des gesamten Einstellvorgangs und nicht zuletzt zu hohem Ausschussmaterial bzw. einer großen Menge an sogenannter B-Ware. Ebenfalls ist ein Verfahren für die Überwachung von Folien sowie eine Messvorrichtung für die Überwachung von Folien in den Druckschriften EP 1 616 687 A1, US 4,101,614 A, JP H05 138733 A, WO 2014/143929 A2, US 3,374,303 A, DE 693 14 404 T2 und US 5,295,805 A gezeigt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Qualität der Stretchfolie zu verbessern, insbesondere Ausschuss zu reduzieren.

Voranstehende Aufgabe wird gelöst durch ein Verfahren mit den Merkmalen des Anspruchs 1, eine Messvorrichtung mit den Merkmalen des Anspruchs 12 sowie eine Folienmaschine mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Messvorrichtung und der erfindungsgemäßen Folienmaschine sowie jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient der Überwachung der Dehnfähigkeit bei der Herstellung von Stretchfolie in einem Gießfolienverfahren. Hierfür weist das erfindungsgemäße Verfahren die folgenden Schritte auf:
- Bestimmen der Position der Frostlinie eines zu einer Folienbahn erstarrenden Folienmaterials auf einer Gießwalze einer Folienmaschine,
- Ermitteln der Korrelation der bestimmten Position der Frostlinie zu zumindest einer Soll-Position,
- Vergleich der ermittelten Korrelation mit einer der zumindest einen Soll-Position zugeordneten Dehnfähigkeit des Folienmaterials.

Bei einem erfindungsgemäßen Verfahren erfolgt eine Möglichkeit der Zuordnung der Dehnfähigkeit und damit der Überwachung der Dehnfähigkeit der Stretchfolie innerhalb des Produktionsverfahrens. Dies kann auch als sogenannte Inline-Bestimmung oder Inline-Messung bezeichnet werden. Dabei wurde überraschend festgestellt, dass eine Korrelation zwischen der Dehnfähigkeit des Folienmaterials der Stretchfolie und der Position der Frostlinie auf der Gießwalze besteht.

Unter einer Frostlinie ist im Sinne der vorliegenden Erfindung der Abschnitt auf der Gießwalze bzw. im Folienmaterial auf der Gießwalze zu verstehen, in welchem der Erstarrungsvorgang stattfindet. So wird ab einer gewissen Schmelzetemperatur, die insbesondere in der Nähe der Erstarrungstemperatur des Folienmaterials liegt, sich die kristalline Struktur des Folienmaterials ändern und das gesamte Folienmaterial sich verfestigen und damit erstarren. Anschließend, also im weiteren Verlauf der Kontaktlänge des Folienmaterials auf der Gießwalze, ist die Folienbahn erstarrt und nicht mehr fließfähig, sondern in einem festen Zustand. Dieser Übergangsbereich wird als Frostlinie bezeichnet.

Dabei kann die Frostlinie eine axiale Erstreckung entlang einer Geraden auf der Oberfläche der Gießwalze aufweisen, welche insbesondere parallel zur Rotationsachse der Gießwalze verläuft. Dabei ist sowohl eine linienförmige, als auch eine abschnittsbreite Erstreckung der Frostlinie im Sinne der vorliegenden Erfindung denkbar.

Die Frostlinie kann, wie später noch erläutert wird, auf unterschiedlichste Weise festgestellt werden. Beispielhaft seien hier eine Temperaturmessung, eine Ultraschallüberwachung oder Ähnliches genannt. Somit wird nach dem Bestimmen der Frostlinie erfindungsgemäß eine Korrelation möglich, zu zumindest einer Soll-Position. Die Soll-Position kann dabei bereits ein Qualitätskriterium enthalten bzw. kann der Soll-Position ein Qualitätskriterium zugrunde legen. So ist grundsätzlich erkannt worden, dass die Dauer der Abkühlung in Zusammenhang mit der Dehnfähigkeit der Stretchfolie steht. So ist ein entscheidender Faktor für eine hohe Dehnfähigkeit eine langsame Abkühlung, insbesondere von einer hohen Schmelzetemperatur des Folienmaterials. Je langsamer eine Abkühlung stattfindet, umso länger ist auch der Weg, den das fließfähige Folienmaterial auf der Oberfläche der Gießwalze gemeinsam mit dieser durch die Rotation der Gießwalze zurücklegt. Die gesamte Umschlingung der Gießwalze durch das Folienmaterial wird auch als Kontaktlänge bezeichnet. Je weiter hinten sich also die Frostlinie in der Kontaktlänge befindet, umso länger ist der Weg, welchen das Folienmaterial im noch fließfähigen Zustand zurückgelegt hat. Je nach Rotationsgeschwindigkeit, insbesondere jedoch bei gleicher Rotationsgeschwindigkeit, ist eine nach hinten verschobene Frostlinie damit mit einer längeren Kühlzeit und auf diese Weise auch mit einer langsameren Kühlrate korreliert.

Erfindungsgemäß ist nun zumindest eine Soll-Position vorgegeben, wobei die Korrelation zu der bestimmten Position der Frostlinie insbesondere in qualitativer oder quantitativer Weise zu verstehen ist. So kann es grundsätzlich ausreichen, wenn die Korrelation eine Information darüber beinhaltet, ob die Frostlinie entlang der Kontaktlänge vor oder nach der Soll-Position liegt. Da eine längere Kontaktlänge einer höheren Dehnfähigkeit zuordenbar ist, ist dementsprechend die Soll-Position als zumindest ein Qualitätsmerkmal eine Maßgabe dafür, ob die dieser Soll-Position zugeordnete Dehnfähigkeit erreicht ist oder nicht. Befindet sich also die Frostlinie hinter der Soll-Position bezogen auf die Kontaktlinie, ist das Qualitätskriterium erfüllt. Liegt die Frostlinie dem entgegengesetzt vor der Soll-Position bezogen auf die Kontaktlänge, so ist das Soll-Kriterium bzw. dieses Qualitätsmerkmal der minimalen Dehnfähigkeit nicht erreicht.

Selbstverständlich sind auch deutlich komplexere Regelungsmechanismen mit einem erfindungsgemäßen Verfahren möglich. So sind auch zwei oder mehr Soll-Positionen denkbar, so dass die Korrelation zu diesen zwei oder mehr Soll-Positionen eine Vielzahl von Korrelationen beinhaltet. Damit kann in noch feinerer Weise qualitativ oder sogar quantitativ die Dehnfähigkeit zuordenbar sein. In einem idealen Regelfall ist eine beliebige Anzahl von Soll-Positionen vorgegeben, welche insbesondere als funktionaler Zusammenhang oder als Regelungsgraph zur Verfügung steht. Auch als Kennlinie kann eine hohe Anzahl von Soll-Positionen vorgegeben werden, welche entweder als reine Kennlinie oder durch Interpolation von Stützstellen als ermittelte Kennlinie definiert wird. In all diesen Fällen beinhaltet die Korrelation einen entsprechenden Abstand zur nächsten Soll-Position bzw. beim Zurverfügungstellen eines funktionalen Zusammenhangs direkt die zuordenbare Dehnfähigkeit der exakt getroffenen Soll-Position durch den entsprechenden funktionalen Zusammenhang.

Durch ein erfindungsgemäßes Verfahren ist es nun möglich, den Anlaufvorgang der Maschine inline und insbesondere kontinuierlich zu überwachen. Dabei wird bevorzugt die später noch beschriebene Regelschleife eingesetzt, so dass der Vergleich der ermittelten Korrelation mit der zugeordneten Dehnfähigkeit eine zielgerichtete Veränderung von Regelungsparametern der Folienmaschine nach sich zieht. Auch wird auf diese Weise eine Inline-Überwachung der Qualitätskriterien möglich, welche ebenfalls ein Nachregeln oder Nachsteuern in erfindungsgemäßer Weise erlaubt. Durch die voranstehenden Schritte wird nicht nur der Aufwand und die Zeit für die Qualitätsüberwachung sowie den Anlaufvorgang der Maschine reduziert, sondern damit auch die dafür notwendige Ausschussware von reduzierter Qualität deutlich vermindert.

Eine maximale Dehnfähigkeit der Stretchfolie liegt dabei vorzugsweise in einem Bereich zwischen ca. 50 % und ca. 500 %. Bevorzugt sind Bereiche zwischen ca. 200 % und ca. 500 %, wobei besonders bevorzugt der Bereich zwischen ca. 300 % und ca. 500 % liegt. Unter den später noch beschriebenen Regelparametern, auf welche ein erfindungsgemäßes Verfahren Einfluss nehmen kann, sind insbesondere die Temperatur der Gießwalze, ein Unterdruck in der Vakuumbox der Folienmaschine, die Schmelzfahnenlänge oder die Schmelzetemperatur zu nennen.

Es kann vorteilhaft sein, wenn bei einem erfindungsgemäßen Verfahren die Bestimmung der Frostlinie zumindest teilweise mittels Ultraschall durchgeführt wird. Dies ist besonders vorteilhaft hinsichtlich einer berührungslosen Bestimmungsmöglichkeit. So kann aus Transmission, Adsorption und/oder Reflexion der Ultraschallstrahlung ein entsprechender Rückschluss auf die Frostlinie gezogen werden. Diese berührungslose und schnelle Bestimmung erfasst dabei insbesondere sich ausbildende kristalline Strukturen in dem Erstarrungsvorgang des Folienmaterials. Selbstverständlich ist diese Bestimmung der Frostlinie mit den nachfolgend erläuterten Bestimmungsmöglichkeiten frei kombinierbar, um zum Beispiel eine höhere Geschwindigkeit oder eine höhere Genauigkeit der Bestimmung der Frostlinie erzielen zu können.

Ebenfalls von Vorteil kann es sein, wenn bei einem erfindungsgemäßen Verfahren die Bestimmung der Frostlinie zumindest teilweise durch eine Markierungsvorrichtung, insbesondere eine Markierungswalze, durchgeführt wird, wobei geometrische Markierungen in das erstarrende Folienmaterial eingebracht werden. So kann beispielsweise durch eine Markierungswalze, welche auch durch eine später noch beschriebene Putzwalze zur Verfügung gestellt werden kann, ein mechanischer Einfluss auf das Folienmaterial erfolgen. Ist das Folienmaterial noch in einem fließfähigen Zustand, befindet es sich also noch vor der Frostlinie, so wird diese mechanische Beeinträchtigung geometrische Markierungen im Folienmaterial hinterlassen. In dieser Position der Markierungsvorrichtung ist das Folienmaterial also noch fließfähig und befindet sich vor der Frostlinie. Hinterlässt jedoch die Markierungsvorrichtung keine sichtbaren Markierungen mehr, so ist darauf zurückzuschließen, dass an dieser Position der Markierungsvorrichtung das Folienmaterial bereits ausreichend erkaltet ist. Diese Position befindet sich also hinter der Frostlinie. Mit diesem Verfahren kann in iterativer Weise eine Auffindung der Frostlinie erfolgen. Dabei ist vorzugsweise die Kombination mit einer Kamera vorgesehen, welche in der Lage ist, bedienerunterstützt oder sogar vollautomatisch die geometrischen Markierungen wahrzunehmen. Insbesondere ist für eine Iterationsmöglichkeit eine solche Markierungsvorrichtung in Umfangsrichtung der Gießwalze bewegbar angeordnet.

Vorteilhaft ist es ebenfalls, wenn bei einem erfindungsgemäßen Verfahren die Bestimmung der Frostlinie zumindest teilweise mittels Temperaturbestimmung des Folienmaterials, insbesondere im Vergleich mit einer Erstarrungstemperatur des Folienmaterials, erfolgt. Dabei ist grundsätzlich zu unterscheiden zwischen einer Erstarrungstemperatur, also der Temperatur, bei welcher der Phasenübergang zwischen Feststoff und flüssig für das Folienmaterial erfolgt, und einer Schmelzetemperatur, welche oberhalb der Erstarrungstemperatur liegt, und welche die Temperatur des fließfähigen bzw. flüssigen Folienmaterials darstellt. Die Temperaturbestimmung kann dabei ebenfalls berührend oder kontaktlos, zum Beispiel mithilfe von Infrarotmessung erfolgen. Insbesondere kann hier eine besonders genaue und direkte Bestimmung der Frostlinie erfolgen, ohne dass eine regelungstechnische Interpretation anderer Sensordaten erfolgen muss. Vielmehr reicht der Vergleich und damit die Korrelation zwischen bestimmter Temperatur und Erstarrungstemperatur des Folienmaterials aus, um eine Information zu erhalten, wo die Frostlinie liegt bzw. wie weit die aktuelle Messposition noch von der Frostlinie entfernt ist. Auch ist bereits durch die Bestimmung einer Temperatur an einem Umfangspunkt eine erste Aussage über die Dehnfähigkeit der Folienbahn bzw. des Folienmaterials zu treffen. Beispielsweise können entsprechende thermische Sensorelemente auf einer Putzwalze angeordnet sein, und der entsprechend sich ausbildende Kontakt zwischen Putzwalze und Folienmaterial für die Durchführung dieser Temperaturbestimmung ausgenutzt werden.

Weiter kann es vorteilhaft sein, wenn bei einem erfindungsgemäßen Verfahren die Bestimmung der Frostlinie zumindest abschnittsweise in einer axialen Richtung quer zur Förderrichtung des Folienmaterials auf einer Gießwalze erfolgt. Eine Gießwalze ist üblicherweise mit einer Zylinderform ausgestaltet, welche um eine Rotationsachse drehbar gelagert ist. Die Gießwalze rotiert also während des gesamten Verfahrens für den entsprechenden Transport und die Kühlung des auf ihrer Oberfläche angeordneten Folienmaterials. Die Bestimmung der Frostlinie erstreckt sich vorzugsweise ebenfalls zumindest über einen Abschnitt dieser axialen Richtung quer zur Förderrichtung des Folienmaterials. Bevorzugt wird eine Frostlinie punktuell oder sogar kontinuierlich über die gesamte Länge der axialen Ausrichtung der Gießwalze bestimmt. Damit wird es möglich, zusätzliche Nachteile zu erkennen bzw. Qualitätsmängeln vorzubeugen. So kann zum Beispiel durch eine verminderte Abdichtung in der Vakuumbox oder ungleicher Schmelzetemperatur am Auslass in Axialrichtung eine asymmetrische Anordnung der Frostlinie die Folge sein. Dies würde entlang der axialen Erstreckung, also der Breite der Folienbahn, zu unterschiedlichen Dehnfähigkeiten führen. Solche asymmetrischen Effekte in Form einer Umfangsverschiebung bzw. eines Umfangsversatzes der Frostlinie werden durch diese Ausführungsform eines erfindungsgemäßen Verfahrens erkennbar und damit behebbar.

Vorteilhaft ist es ebenfalls, wenn bei einem erfindungsgemäßen Verfahren die Bestimmung der Frostlinie an bestimmten, insbesondere festen Bestimmungspositionen durchgeführt wird, welche zueinander in axialer Richtung und/oder in Umfangsrichtung bezogen auf eine Gießwalze der Folienmaschine beabstandet sind. Grundsätzlich sind die Bestimmungspositionen auch als Messpositionen definierbar und vorgebbar. So kann beispielsweise mit einer Umfangsverstellung einer Verstellvorrichtung eine entsprechende Sensorvorrichtung bzw. Messvorrichtung verfahren werden, um eine Suche der Frostlinie durchzuführen. Jedoch sind auch Messvorrichtungen mit einzelnen Sensorelementen an festen Bestimmungspositionen denkbar, um zumindest eine Eingrenzung der Frostlinie auf einen möglichst kleinen Bereich zuzulassen.

Vorteilhaft ist es weiter, wenn bei einem erfindungsgemäßen Verfahren die Korrelation der bestimmten Position der Frostlinie zur zumindest einen Soll-Position qualitativ erfolgt. Wie bereits in der Einleitung erwähnt, ist dabei eine qualitative Auswertung hinsichtlich einer Lage vor oder nach der Soll-Position, bezogen auf die Kontaktlänge, zu verstehen. So kann in einfacher Weise eine Erfüllung des Qualitätsmerkmals positiv oder negativ beantwortet werden. Damit ist auch eine einfache, kostengünstige und vor allem schnelle Regelung möglich.

Selbstverständlich ist es jedoch auch denkbar, dass bei einem erfindungsgemäßen Verfahren vorteilhafterweise die Korrelation der bestimmten Position der Frostlinie zur zumindest einen Soll-Position quantitativ erfolgt. Es wird also vorzugsweise ein Zahlenwert bzw. ein Zahlenparameter für die Korrelation bestimmt, welcher zum Beispiel den Abstand entlang der Kontaktlänge in Millimetern bemisst. Auch ein Abstand zwischen Frostlinie und Soll-Position hinsichtlich der Winkelposition bezogen auf die Rotationsachse der Gießwalze ist dabei im Sinne der vorliegenden Erfindung denkbar. Insbesondere bei der Verwendung eines erfindungsgemäßen Verfahrens für die später noch erläuterte Regelungsschleife kann ein quantitatives Analyseverfahren große Vorteile mit sich bringen. Auch können Güteklassen eingeführt werden, welche mit entsprechenden Korrelationswerten in quantitativer Weise korrelieren.

Ein weiterer Vorteil ist erzielbar, wenn bei einem erfindungsgemäßen Verfahren die Korrelation der bestimmten Positionen der Frostlinie mit zumindest zwei Soll-Positionen erfolgt, wobei anschließend wenigstens ein Regelungsschritt erfolgt, um die bestimmte Position der Frostlinie zwischen den beiden Soll-Positionen zu halten oder zwischen die beiden Soll-Positionen zu bewegen. So wird ein besonders enges Toleranzfenster vorgegeben, welches zwischen diesen beiden Soll-Positionen angeordnet ist. Insbesondere wird auf diese Weise auch eine zu hohe Dehnfähigkeit vermieden, welche möglicherweise zu zu geringen Haltekräften im Einsatz einer Wickelmaschine führen würde. Eine nicht ausreichende Ladungssicherung könnte bei zu geringen Haltekräften die Folge sein. Eine Bewegung zwischen die beiden Soll-Positionen erfolgt also dann, wenn die Frostlinie außerhalb dieses Toleranzfensters liegt. Befindet sich die Frostlinie innerhalb dieses Toleranzfensters, so führt der Regelungsschritt dazu, die Frostlinie dort zu halten. Der Regelungsschritt beinhaltet dabei eine Veränderung oder ein bewusstes Gleichhalten der entsprechenden Regelungsparameter der Folienmaschine. Dabei kann die Regelung Teil dieses Verfahrens oder auch Teil eines nachgelagerten Regelungsverfahrens sein, welchem die entsprechenden Informationen, insbesondere die Korrelation, als Eingangswert zur Verfügung gestellt werden.

Weiter ist es von Vorteil, wenn bei einem erfindungsgemäßen Verfahren die ermittelte Korrelation und/oder die zugeordnete Dehnfähigkeit gespeichert wird. Das bedeutet, dass insbesondere in kontinuierlicher Weise eine Überwachung der gesamten Produktion erfolgt. So können unterschiedlichste Qualitätsklassen bereits während der Fertigung eingestellt bzw. aufgrund der Bestimmung überwacht und gespeichert werden. Auch kann hier eine erleichterte Dokumentation der entsprechenden Güteklassen sowie der notwendigen Garantiewerte erfolgen. Insbesondere hinsichtlich möglicher Gewährleistungsfragen entstehen hier große Vorteile, da dieser Schritt insbesondere automatisiert durchgeführt wird.

Ein weiterer Vorteil ist es, wenn bei einem erfindungsgemäßen Verfahren auf Basis der zugeordneten Dehnfähigkeit eine Steuerung und/oder eine Regelung der Folienmaschine erfolgt für eine zielgerichtete Änderung der Position der Frostlinie. Mit anderen Worten wird eine Regelschleife in das erfindungsgemäße Verfahren eingebaut oder dem erfindungsgemäßen Verfahren nachgelagert. Die zugeordnete Dehnfähigkeit und die damit beschriebene Korrelation zu einer Soll-Dehnfähigkeit ist dementsprechend eine zielgerichtete Änderungsmöglichkeit für Regelparameter. So können entsprechende Regelparameter der Folienmaschine, wie sie bereits erläutert worden sind, verändert werden, um zielgerichtet die Frostlinie zu verschieben und damit die Dehnfähigkeit der hergestellten Stretchfolie zu verändern. Insbesondere ist hier ein automatisches Nachregeln und damit eine automatische Rückkopplung bei erkannter Abweichung sowohl in einem Anfahrprozess der Folienmaschine als auch im laufenden Betrieb eingesetzt. Auch kann ein Speichern solcher Informationen über zielgerichtete Änderungen dem Erstellen oder Optimieren eines Folienmodells dienen, welches später in Form von Kennlinien der Regelung weiter zugrunde gelegt werden kann. Dabei sind die zielgerichtete Änderung sowie die Regelung sowohl quantitativ als auch qualitativ im Sinne der vorliegenden Erfindung denkbar. Nicht zuletzt können solche Daten, insbesondere gespeicherte Qualitätsdaten der Dehnfähigkeit, an einen Wickelroboter weitergegeben werden, um diesen mit der exakt vorhandenen und bestimmten Dehnfähigkeit der momentan verwendeten Stretchfolie zu versorgen, so dass vorzugsweise immer exakt die richtige Haltekraft durch eine entsprechende Variation der verwendeten Dehnung abhängig von der zugeordneten Dehnfähigkeit der Stretchfolie vom Wickelroboter einsetzbar ist.

Ebenfalls Gegenstand der vorliegenden Erfindung ist eine Messvorrichtung für die Überwachung der Dehnfähigkeit bei der Herstellung von Stretchfolie in einem Gießfolienverfahren. Eine solche Messvorrichtung weist eine Sensorvorrichtung für eine Bestimmung der Position einer Frostlinie eines zu einer Folienbahn erstarrenden Folienmaterials auf einer Gießwalze einer Folienmaschine auf. Weiter ist eine Kontrolleinheit vorgesehen für eine Ermittlung der Korrelation der bestimmten Position der Frostlinie zur zumindest einer Soll-Position sowie einen Vergleich der ermittelten Korrelation mit einer der zumindest einen Soll-Position zugeordneten Dehnfähigkeit des Folienmaterials. Die Kontrolleinheit und/oder die Sensorvorrichtung sind dabei vorzugsweise ausgebildet für die Ausführung eines erfindungsgemäßen Verfahrens. Damit bringt die Messvorrichtung die gleichen Vorteile mit sich, wie sie ausführlich mit Bezug auf ein erfindungsgemäßes Verfahren erläutert worden sind.

Ebenfalls Gegenstand der vorliegenden Erfindung ist eine Folienmaschine für eine Herstellung von Stretchfolie in einem Gießfolienverfahren. Diese Folienmaschine weist eine Auslassvorrichtung mit einem Auslassspalt für den Auslass fließfähigen Folienmaterials und eine drehbar gelagerte Gießwalze für die Aufnahme des ausgelassenen fließfähigen Folienmaterials auf der Oberfläche der Gießwalze auf. Weiter weist die Folienmaschine eine Messvorrichtung gemäß der vorliegenden Erfindung auf. Insbesondere ist weiter eine Putzvorrichtung mit einer drehbar gelagerten Putzwalze für eine Kontaktierung des auf der Oberfläche der Gießwalze angeordneten Folienmaterials vorgesehen. Durch die Verwendung einer erfindungsgemäßen Messvorrichtung bringt die erfindungsgemäße Folienmaschine die gleichen Vorteile mit sich, wie sie ausführlich mit Bezug auf ein erfindungsgemäßes Verfahren erläutert worden sind. Dabei kann die Messvorrichtung zumindest teilweise mit der Putzvorrichtung kombiniert werden, insbesondere mit einem entsprechenden Verstellmechanismus dieser Putzvorrichtung.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Folienmaschine,
- Fig. 2: die Ausführungsform der Fig. 1 mit veränderter Position einer Putzvorrichtung,
- Fig. 3: eine Möglichkeit der Korrelation einer Dehnfähigkeit,
- Fig. 4: eine weitere Ausführungsform einer Korrelation einer Dehnfähigkeit und
- Fig. 5: eine Möglichkeit eines zielgerichteten Regelns.

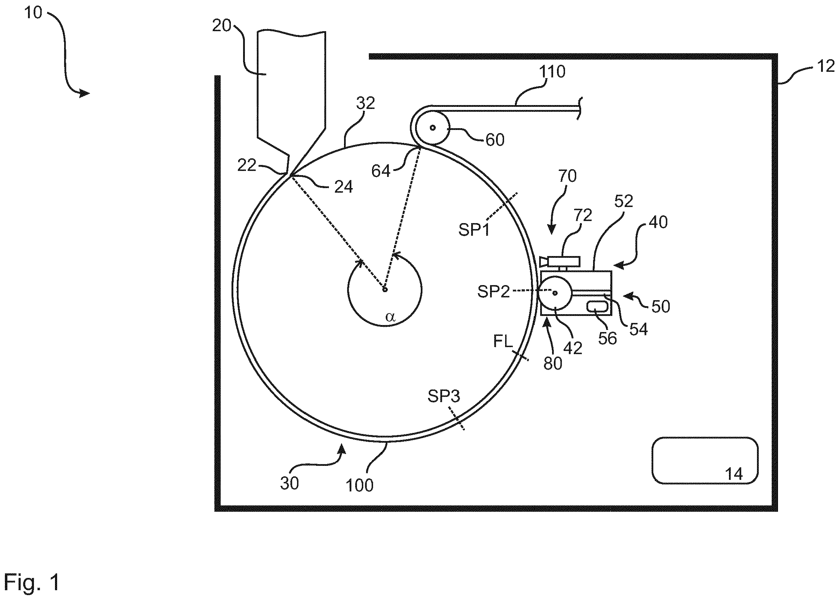

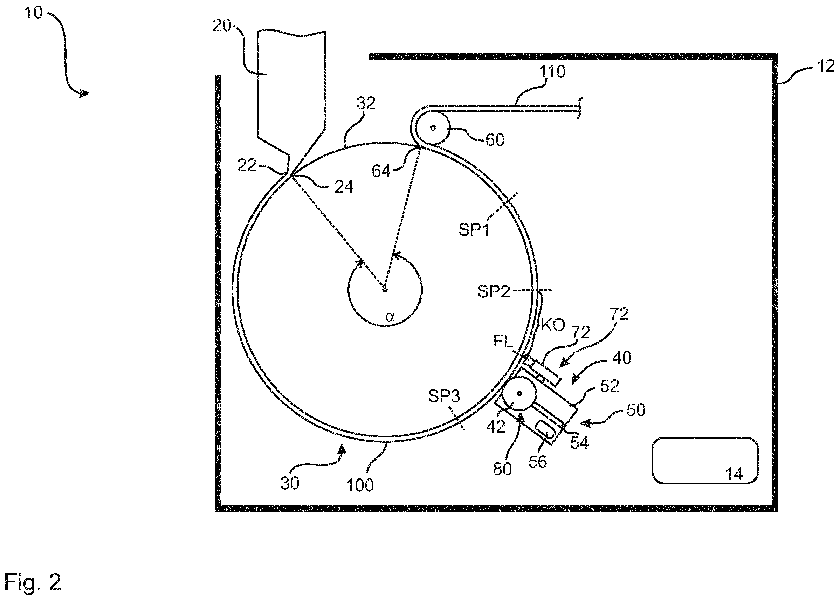

Die Fig. 1 und 2 zeigen schematisch eine Folienmaschine 10 mit einem Gestell 12. In diesem Gestell 12 befindet sich eine Gießwalze 30, welche rotierbar gelagert in diesem Gestell 12 aufgenommen ist. Über eine Auslassvorrichtung 20, welcher zum Beispiel eine oder mehrere Extrudervorrichtungen vorgelagert sind, wird fließfähiges Folienmaterial 100 über einen Auslassspalt 22 auf der Oberfläche 32 der Gießwalze 30 angeordnet. Die Gießwalze 30 ist dabei gekühlt ausgebildet, so dass über die Kontaktlänge eine Kühlrate und damit ein Abkühlen des Folienmaterials 100 zur Verfügung gestellt wird. Am Abhebeort 64, welcher zusammen mit dem Aufnahmeort 24 einen Umschlingungswinkel α ergibt, wird über eine Abrisswalze 60 nun die erstarrte Folienbahn 110 von der Gießwalze 30 abgehoben.

Die Ausführungsform gemäß der Fig. 1 ist weiter mit einer Putzvorrichtung 40 ausgestattet, welche mithilfe einer Putzwalze 42 die Folienbahn 110 bzw. das Folienmaterial 100 kontaktiert. Diese Kontaktierung dient dazu, entsprechende Verschmutzungen zwischen der Oberfläche 32 der Gießwalze 30 und des Folienmaterials 100 in das Folienmaterial 100 einzudrücken und mit diesem abzufördern. Die Putzvorrichtung 40 ist mit einem Verstellmechanismus 50 versehen, welcher sowohl eine Umfangsverstellung 52, als auch eine Radialverstellung 54 für die Putzwalze 42 aufweist.

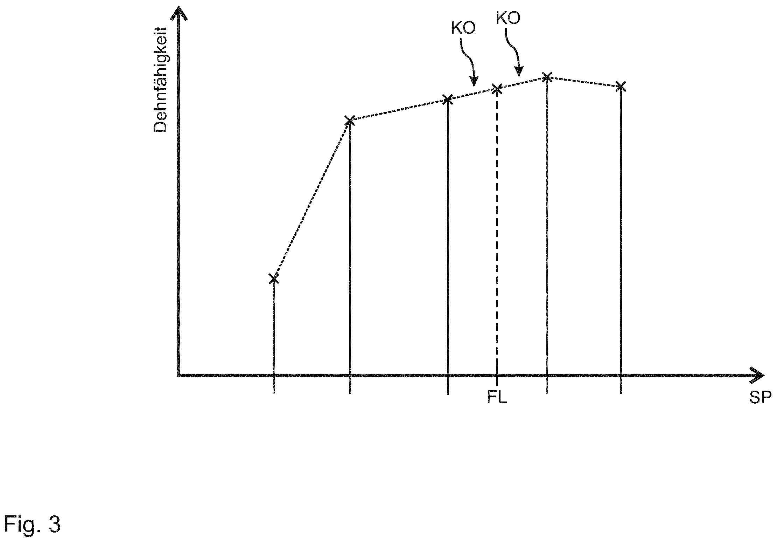

Weiter ist hier eine Messvorrichtung 70 vorgesehen, welche mithilfe einer Sensorvorrichtung 72 eine Frostlinie FL des Folienmaterials 100 erkennen kann. Regelungstechnisch sind hier darüber hinaus drei Soll-Positionen SP1, SP2 und SP3 dargestellt, wie sie später noch mit Bezug auf die Fig. 3 bis 5 erläutert werden.

Ein erfindungsgemäßes Verfahren sucht nun die Frostlinie FL, hier indem durch die Umfangsverstellung 52 auch die Messvorrichtung 70 in Umfangsrichtung zur Gießwalze 30 bewegt wird. Fig. 2 zeigt die Situation, bei welcher die Frostlinie FL gefunden worden ist. Über eine Kontrolleinheit 14 ist nun die Durchführung eines erfindungsgemäßen Verfahrensschrittes möglich. So wird nun die Korrelation KO zwischen der Frostlinie FL und hier der zweiten Soll-Position SP2 erstellt. Dabei handelt es sich entweder um einen qualitativen Abstand, also die Lage in Richtung der Kontaktlänge vor der Soll-Position SP2, oder quantitativ um den tatsächlichen Abstand in Winkelgraden oder Millimetern zwischen der Frostlinie FL und der zweiten Soll-Position SP2. Dies kann für die entsprechende Information verwendet werden, welche Dehnfähigkeit die aktuell produzierte Folienbahn 110 aufweist.

Fig. 3 zeigt, wie in quantitativer und qualitativer Weise ein erfindungsgemäßes Verfahren ausbildbar ist. Wird nun die Frostlinie FL erkannt, so kann sie in einem entsprechenden Diagramm verglichen werden mit in diesem Fall insgesamt fünf Soll-Positionen SP. Hier liegt die Frostlinie FL zwischen der dritten und der vierten Soll-Position SP. Dies ist die qualitative Aussage, welche dementsprechend eine Dehnfähigkeit zwischen den beiden Dehnfähigkeiten, welche diesen beiden Soll-Positionen SP zugeordnet sind, definiert. Auch ist es hier möglich, zum Beispiel durch lineare Interpolation die einzelnen Soll-Positionen SP als Stützstellen miteinander zu verbinden, so dass auch eine quantitative Aussage durch den expliziten Abstand zur jeweiligen Soll-Position für die tatsächliche Dehnfähigkeit der Folienbahn 110 möglich wird.

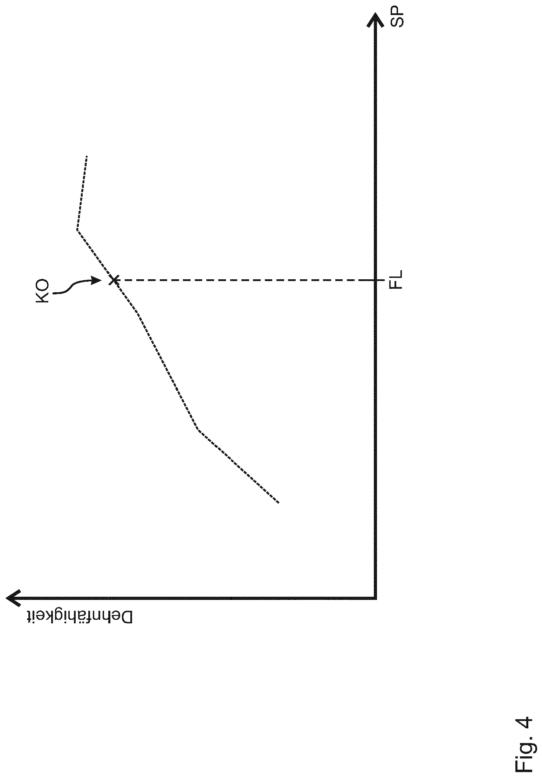

Die Fig. 4 zeigt dabei eine Lösung, bei welcher die Soll-Positionen SP durch einen funktionalen Zusammenhang mit der Frostlinie FL eingestellt werden. So ist im Prinzip eine beliebig hohe Anzahl von Soll-Positionen SP in diesem funktionellen Zusammenhang dargestellt, so dass direkt zu erkannten Positionen der Frostlinie FL die Korrelation eine entsprechend zugeordnete Dehnfähigkeit zur Verfügung stellt.

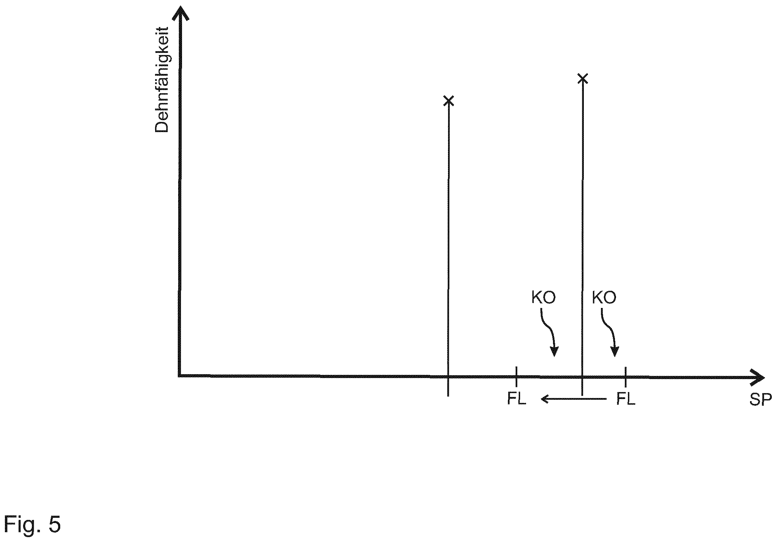

In Fig. 5 ist dargestellt, wie eine zielgerichtete Änderung erfolgen kann. So wurde eine Frostlinie FL außerhalb eines Toleranzfeldes zwischen den beiden Soll-Positionen Streitpatent dieser Ausführungsform erkannt. Wie der Pfeil darstellt, erfolgt anschließend eine Veränderung von ein oder mehreren Regelungsparametern der Folienmaschine 10, um die Frostlinie FL zurück in das Toleranzfenster zu schieben.

### Bezugszeichenliste

- 10: Folienmaschine
- 12: Gestell
- 14: Kontrolleinheit
- 20: Auslassvorrichtung
- 22: Auslassspalt
- 24: Aufnahmeort
- 30: Gießwalze
- 32: Oberfläche
- 40: Putzvorrichtung
- 42: Putzwalze
- 50: Verstellmechanismus
- 52: Umfangsverstellung
- 54: Radialverstellung
- 56: Sensorvorrichtung
- 60: Abrisswalze
- 64: Abhebeort
- 70: Messvorrichtung
- 72: Sensorvorrichtung
- 80: Markierungsvorrichtung
- 100: Folienmaterial
- 110: Folienbahn
- α: Umschlingungswinkel
- KO: Korrelation
- SP: Soll-Position
- FL: Frostlinie

## Patentansprüche

1. Verfahren für die kontinuierliche Überwachung der Dehnfähigkeit bei der Herstellung von Stretchfolie in einem Gießfolienverfahren, aufweisend die folgenden Schritte:
- Bestimmen der Position einer Frostlinie (FL) eines zu einer Folienbahn (110) erstarrenden Folienmaterials (100) auf einer Gießwalze (30) einer Folienmaschine (10),
- Ermitteln der Korrelation (KO) der bestimmten Position der Frostlinie (FL) zu zumindest einer Soll-Position (SP),
- Vergleich der ermittelten Korrelation (KO) mit einer der zumindest einen Soll-Position (SP) zugeordneten Dehnfähigkeit des Folienmaterials (100),
- wobei die Bestimmung der Frostlinie (FL) zumindest teilweise mittels Temperaturbestimmung des Folienmaterials (100) erfolgt, wobei eine genaue und direkte Bestimmung der Frontlinie (FL) erfolgt, ohne dass eine regelungstechnische Interpretation anderer Sensordaten erfolgt und wobei ermittelt wird wie weit die aktuelle Messposition von der Frostlinie entfernt ist.

2. Verfahren nach Anspruch 1,
**dadurch gekennzeichnet, dass**
die Bestimmung der Frostlinie (FL) zumindest teilweise mittels Ultraschall durchgeführt wird.

3. Verfahren nach einem der vorangegangenen Ansprüche,
**dadurch gekennzeichnet, dass**
die Bestimmung der Frostlinie (FL) zumindest teilweise durch eine Markierungswalze durchgeführt wird, wobei geometrische Markierungen in das erstarrende Folienmaterial (100) eingebracht werden.

4. Verfahren nach einem der vorangegangenen Ansprüche,
**dadurch gekennzeichnet, dass**
die Bestimmung der Frostlinie (FL) im Vergleich mit einer Erstarrungstemperatur des Folienmaterials (100) erfolgt.

5. Verfahren nach einem der vorangegangenen Ansprüche,
**dadurch gekennzeichnet, dass**
die Bestimmung der Frostlinie (FL) zumindest abschnittsweise in einer axialen Richtung quer zur Förderrichtung des Folienmaterials (100) auf einer Gießwalze (30), erfolgt.

6. Verfahren nach einem der vorangegangenen Ansprüche,
**dadurch gekennzeichnet, dass**
die Bestimmung der Frostlinie (FL) an bestimmten, insbesondere festen, Bestimmungspositionen durchgeführt wird, welche zueinander in axialer Richtung und/oder in Umfangsrichtung bezogen auf eine Gießwalze (30) der Folienmaschine (10) beabstandet sind.

7. Verfahren nach einem der vorangegangenen Ansprüche,
**dadurch gekennzeichnet, dass**
die Korrelation (KO) der bestimmten Position der Frostlinie (FL) zur zumindest einen Soll-Position (SP) qualitativ erfolgt.

8. Verfahren nach einem der vorangegangenen Ansprüche,
**dadurch gekennzeichnet, dass**
die Korrelation (KO) der bestimmten Position der Frostlinie (FL) zur zumindest einen Soll-Position (SP) quantitativ erfolgt.

9. Verfahren nach einem der vorangegangenen Ansprüche,
**dadurch gekennzeichnet, dass**
die Korrelation (KO) der bestimmten Position der Frostlinie (FL) mit zumindest zwei Soll-Positionen (SP) erfolgt, wobei anschließend wenigstens ein Regelungsschritt erfolgt, um die bestimmte Position der Frostlinie (FL) zwischen den beiden Soll-Positionen (SP) zu halten oder zwischen die beiden Soll-Positionen (SP) zu bewegen.

10. Verfahren nach einem der vorangegangenen Ansprüche,
**dadurch gekennzeichnet, dass**
die ermittelte Korrelation (KO) und/oder die zugeordnete Dehnfähigkeit gespeichert wird.

11. Verfahren nach einem der vorangegangenen Ansprüche,
**dadurch gekennzeichnet, dass**
auf Basis der zugeordneten Dehnfähigkeit eine Steuerung und/oder eine Regelung der Folienmaschine (10) erfolgt für eine zielgerichtete Änderung der Position der Frostlinie (FL).

12. Messvorrichtung (70) für die kontinuierliche Überwachung der Dehnfähigkeit bei der Herstellung von Stretchfolie in einem Gießfolienverfahren, aufweisend eine Sensorvorrichtung (72) für eine Bestimmung der Position einer Frostlinie (FL) eines zu einer Folienbahn (110) erstarrenden Folienmaterials (100) auf einer Gießwalze (30) einer Folienmaschine (10) sowie eine Kontrolleinheit (14), die für eine Ermittlung der Korrelation (KO) der bestimmten Position der Frostlinie (FL) zu zumindest einer Soll-Position (SP) sowie einen Vergleich der ermittelten Korrelation (KO) mit einer der zumindest einen Soll-Position (SP) zugeordneten Dehnfähigkeit des Folienmaterials (100) ausgebildet ist, wobei die Bestimmung der Frostlinie (FL) zumindest teilweise mittels Temperaturbestimmung des Folienmaterials (100) erfolgt, wobei eine genaue und direkte Bestimmung der Frontlinie (FL) erfolgt, ohne dass eine regelungstechnische Interpretation anderer Sensordaten erfolgt und wobei ermittelbar ist wie weit die aktuelle Messposition von der Frostlinie entfernt ist.

13. Messvorrichtung (70) nach Anspruch 12,
**dadurch gekennzeichnet, dass**
die Kontrolleinheit (14) und/oder die Sensorvorrichtung (72) ausgebildet sind für die Ausführung eines Verfahrens mit den Merkmalen eines der Ansprüche 1 bis 11.

14. Folienmaschine (10) für die Herstellung von Stretchfolie in einem Gießfolienverfahren, aufweisend eine Auslassvorrichtung (20) mit einem Auslassspalt (22) für den Auslass fließfähigen Folienmaterials (100) und eine drehbar gelagerte Gießwalze (30) für die Aufnahme des ausgelassenen fließfähigen Folienmaterials (100) auf der Oberfläche (32) der Gießwalze (30), weiter aufweisend eine Messvorrichtung (70) mit den Merkmalen eines der Ansprüche 12 oder 13, insbesondere weiter aufweisend eine Putzvorrichtung (40) mit einer drehbar gelagerten Putzwalze (42) für eine Kontaktierung des auf der Oberfläche (32) der Gießwalze (30) angeordneten Folienmaterials (100).

## Claims

1. A method for the continuous monitoring of the ductility in the production of stretch film in a cast film process, having the following steps:
- identifying the position of a frost line (FL) of a film material (100), which solidifies to form a film web (110) on a casting roller (30) of a film machine (10),
- determining the correlation (KO) of the identified position of the frost line (FL) to at least one target position (SP),
- comparison of the determined correlation (KO) with a ductility of the film material (100) associated with the at least one target position (SP),
- wherein the identification of the frost line (FL) is carried out at least partially by means of temperature identification of the film material (100), wherein an exact and direct identification of the frost line (FL) takes place without a control engineering interpretation of other sensor data being made and
wherein
it is determined how far the current measurement position is from the frost line.

2. The method according to claim 1,
**characterized in that**
the identification of the frost line (FL) is carried out at least partially by means of ultrasound.

3. The method according to any one of the preceding claims,
**characterized in that**
the identification of the frost line (FL) is carried out at least partially by a marking roller, wherein geometric markings are introduced into the solidifying film material (100).

4. The method according to any one of the preceding claims,
**characterized in that**
the identification of the frost line (FL) takes place in comparison with a solidification temperature of the film material (100).

5. The method according to any one of the preceding claims,
**characterized in that**
the identification of the frost line (FL) takes place at least in sections in an axial direction transverse to the conveying direction of the film material (100) on a casting roller (30).

6. The method according to any one of the preceding claims,
**characterized in that**
the identification of the frost line (FL) is carried out at identified, in particular fixed, identification positions, which are spaced apart from one another in the axial direction and/or in the circumferential direction with respect to a casting roller (30) of the film machine (10).

7. The method according to any one of the preceding claims,
**characterized in that**
the correlation (KO) of the identified position of the frost line (FL) to the at least one target position (SP) is carried out qualitatively.

8. The method according to any one of the preceding claims,
**characterized in that**
the correlation (KO) of the identified position of the frost line (FL) to the at least one target position (SP) is carried out quantitatively.

9. The method according to any one of the preceding claims,
**characterized in that**
the correlation (KO) of the identified position of the frost line (FL) takes place with at least two target positions (SP), wherein subsequently at least one control step takes place, in order to keep the identified position of the frost line (FL) between the two target positions (SP) or to move it between the two target positions (SP).

10. The method according to any one of the preceding claims,
**characterized in that**
the determined correlation (KO) and/or the associated ductility is stored.

11. The method according to any one of the preceding claims,
**characterized in that**
on the basis of the associated ductility, a control and/or regulation of the film machine (10) takes place for a target-oriented change in the position of the frost line (FL).

12. A measuring device (70) for continuous monitoring of the ductility during the production of stretch film in a cast film process, having a sensor device (72) for an identification of the position of a frost line (FL) of a film material (100), which solidifies to form a film web (110), on a casting roller (30) of a film machine (10), and a control unit (14), which is designed for a determination of the correlation (KO) of the identified position of the frost line (FL) to at least one target position (SP) and a comparison of the determined correlation (KO) with a ductility of the film material (100) associated with the at least one target position (SP),
wherein the identification of the frost line (FL) takes place at least partially by means of temperature identification of the film material (100), wherein an exact and direct identification of the frost line (FL) takes place without a control engineering interpretation of other sensor data being made and wherein it can be determined how far the current measurement position is from the frost line.

13. The measuring device (70) according to claim 12,
**characterized in that**
the control unit (14) and/or the sensor device (72) are designed to carry out a method having the features of one of claims 1 to 11.

14. A film machine (10) for producing stretch film in a cast film process, having an outlet device (20) with an outlet gap (22) for the discharge of flowable film material (100) and a rotatably mounted casting roller (30) for receiving the discharged flowable film material (100) on the surface (32) of the casting roller (30), further having a measuring device (70) having the features of one of claims 12 or 13, in particular further having a cleaning device (40) with a rotatably mounted cleaning roller (42) for contacting the film material (100) arranged on the surface (32) of the casting roller (30).

## Revendications

1. Procédé pour la surveillance en continu de l'extensibilité lors de la fabrication d'un film étirable dans un procédé de coulée de film, comprenant les étapes suivantes :
- détermination de la position d'une ligne de gel (FL) d'un matériau de film (100) se solidifiant en une bande de film (110) sur un cylindre de coulée (30) d'une machine à film (10),
- détermination de la corrélation (KO) entre la position déterminée de la ligne de gel (FL) et au moins une position de consigne (SP),
- comparaison de la corrélation (KO) déterminée avec une extensibilité du matériau de film (100) correspondant à l'au moins une position de consigne (SP),
- dans lequel la détermination de la ligne de gel (FL) a lieu au moins partiellement au moyen d'une détermination de température du matériau de film (100), dans lequel une détermination exacte et directe de la ligne de gel (FL) a lieu sans qu'une interprétation technique de régulation d'autres données de capteurs ait lieu et dans lequel il est déterminé dans quelle mesure la position de mesure actuelle est éloignée de la ligne de gel.

2. Procédé selon la revendication 1,
**caractérisé en ce que**
la détermination de la ligne de gel (FL) est effectuée au partiellement au moyen d'ultrasons.

3. Procédé selon l'une des revendications précédentes,
**caractérisé en ce que**
la détermination de la ligne de gel (FL) est effectuée au moins partiellement par un cylindre de marquage, dans lequel des marquages géométriques sont réalisés dans le matériau de film (100) en cours de solidification.

4. Procédé selon l'une des revendications précédentes,
**caractérisé en ce que**
la détermination de la ligne de gel (FL) a lieu en comparaison avec une température de solidification du matériau de film (100).

5. Procédé selon l'une des revendications précédentes,
**caractérisé en ce que**
la détermination de la ligne de gel (FL) a lieu au moins à certains endroits dans une direction axiale transversale par rapport à la direction de convoyage du matériau de film (100) sur un cylindre de coulée (30).

6. Procédé selon l'une des revendications précédentes,
**caractérisé en ce que**
la détermination de la ligne de gel (FL) est effectuée à des positions de détermination déterminées, plus particulièrement fixes, qui sont distantes entre elles dans la direction axiale et/ou sont distantes dans la direction circonférentielle par rapport à un cylindre de coulée (30) de la machine à film (10).

7. Procédé selon l'une des revendications précédentes,
**caractérisé en ce que**
la corrélation (KO) de la position déterminée de la ligne de gel (FL) a lieu de manière qualitative par rapport à l'au moins une position de consigne (SP).

8. Procédé selon l'une des revendications précédentes,
**caractérisé en ce que**
la corrélation (KO) de la position déterminée de la ligne de gel (FL) a lieu de manière quantitative par rapport à l'au moins une position de consigne (SP).

9. Procédé selon l'une des revendications précédentes,
**caractérisé en ce que**
la corrélation (KO) de la position déterminée de la ligne de gel (FL) a lieu avec au moins deux positions de consigne (SP), dans lequel au moins une étape de régulation a ensuite lieu afin de maintenir la position déterminée de la ligne de gel (FL) entre les deux positions de consigne (SP) ou de la déplacer entre les deux positions de consigne (SP).

10. Procédé selon l'une des revendications précédentes,
**caractérisé en ce que**
la corrélation (KO) déterminée et/ou l'extensibilité correspondante est enregistrée.

11. Procédé selon l'une des revendications précédentes,
**caractérisé en ce que**
sur la base de l'extensibilité correspondante, un contrôle et/ou une régulation de machine à film (10) a lieu pour une modification ciblée de la position de la ligne de gel (FL).

12. Dispositif de mesure (70) pour la surveillance en continu de l'extensibilité lors de la fabrication d'un film étirable dans un procédé de coulée de film, comprenant un dispositif de capteur (72) pour une détermination de la position d'une ligne de gel (FL) d'un matériau de film (100) se solidifiant en une bande de film (110) sur un cylindre de coulée (30) d'une machine à film (10) ainsi qu'une unité de contrôle (14), qui est conçue pour une détermination de la corrélation (KO) entre la position déterminée de la ligne de gel (FL) et au moins une position de consigne (SP) ainsi qu'une comparaison de la corrélation (KO) déterminée avec une extensibilité du matériau de film (100) correspondant à l'au moins une position de consigne (SP), dans lequel la détermination de la ligne de gel (FL) a lieu au moins partiellement au moyen d'une détermination de température du matériau de film (100), dans lequel une détermination exacte et directe de la ligne de gel (FL) a lieu sans qu'une interprétation technique de régulation d'autres données de capteurs ait lieu et dans lequel il est possible de déterminer dans quelle mesure la position de mesure actuelle est éloignée de la ligne de gel.

13. Dispositif de mesure (70) selon la revendication 12,
**caractérisé en ce que**
l'unité de contrôle (14) et/ou le dispositif de capteur (72) sont conçus pour l'exécution d'un procédé avec les caractéristiques d'une des revendications 1 à 11.

14. Machine à film (10) pour la fabrication d'un film étirable dans un procédé de coulée de film, comprenant un dispositif de sortie (20) avec un interstice de sortie (22) pour la sortie d'un matériau de film (100) fluide et un cylindre de coulée (30) logé de manière rotative pour le logement du matériau de film (100) fluide distribué sur la surface (32) du cylindre de coulée (30), comprenant en outre un dispositif de mesure (70) avec les caractéristiques d'une des revendications 12 ou 13, plus particulièrement comprenant en outre un dispositif de nettoyage (40) avec un cylindre de nettoyage (42) logé de manière rotative pour une mise en contact du matériau de film (100) disposé sur la surface (32) du cylindre de coulée (30).
